# EUROPEAN PATENT SPECIFICATION

(11) **EP 2 784 545 B1**
(45) Date of publication and mention of the grant of the patent: **14.09.2016**
(21) Application number: 13001667.8
(22) Date of filing: 30.03.2013
(51) Int. Cl.: G01S 19/14, A01K 29/00, G08B 21/02

(54) **Apparatus for tracking an animate being, in particular a bird, and operation of such apparatus**
Vorrichtung zur Verfolgung eines lebendigen Wesens, insbesondere eines Vogels, und Bedienung einer solchen Vorrichtung
Appareil permettant de suivre un être animé, en particulier un oiseau et fonctionnement d'un tel appareil

(43) Date of publication of application: 01.10.2014
(73) Proprietor: Weidinger, Alfons Alexander, 80797 Munich (DE)
(72) Inventor: Weidinger, Alfons Alexander, 80797 Munich (DE)
(74) Representative: Bedenbecker, Markus

(56) References cited:
- EP-A1- 2 063 285
- FR-A1- 2 961 605
- US-A1- 2005 136 912
- US-A1- 2007 266 959
- US-A1- 2008 001 815
- US-A1- 2009 002 188
- US-A1- 2012 206 296

## Description

### BACKGROUND OF THE INVENTION

The present invention concerns a system for tracking a bird according to the precharacterizing portion of claim 1.

To men it becomes more and more important to track animate beings. For instance, biologists are interested in learning about wildlife behavior and would like to know about routes migratory animals take during their daily life. On the other hand, farmers having vast estates need to find their dispersed cattle for medical or business reasons. Finally, owners of very precious birds, like falcons, want to make sure that they can find their property once it was set free for a limited period of time.

In order to find and track birds, radio-telemetry systems have been developed. A radio-telemetry system consists of a transmitter in a tracker case, which is attached to the birds, an antenna, in particular a Yagi-Uda antenna, which needs to be held and positioned by the hand of its user, and a monitoring device which is nothing but headphones according to the prior art. The following problems arise with radio-telemetry systems which are applied for tracking a birds: the antenna is heavy, rendering it very uncomfortable for the user, who additionally has to change his position in order to track the birds from time to time by foot and/or a vehicle. An additional drawback of this kind of system has to be seen in its inaccuracy with regard to the locating of the transmitter. Furthermore, radio-telemetry systems have a range of about only 25 km, which is little, in particular with respect to falcons which can fly several hundred kilometers per day and therefore easily outrange the antenna. Finally, tracking information is given to the user by sound signals in the headphones which are difficult to interpret and render the tracking process even more inaccurate.

From US 2005/0136912 A1 and US 2012/0206296 A1 security and tracking systems are known which are more precise than the aforementioned systems for tracking a bird. These include a tracker case which is attachable to the bird, and a monitoring device, wherein the tracker case comprises receiver means for receiving position and time data from a number of positioning system satellites, and transmitter means for sending said position and time data to a receiver of the monitoring device by means of data communication satellites. However, these documents of the prior art are silent with respect to the designs of the case and how it can be attached to a bird. Consequently, attachment of the tracker case, in particular in a way that it is bird-appropriate, remains a problem.

From EP 2 063 285 A1 it is known that position data can be tracked via a GSM or UMTS module which is located in a housing and attached to the bird in a piggyback way. However, this document of the prior art is silent about the structural design of the housing and its attachment to the bird. Consequently, attachment of the tracker case, in particular in a way that it is bird-appropriate, remains a problem.

From US 2008/0001815 A1 a micro-tracking device for tracing birds, in particular of pigeons, is known which includes a lightweight housing having a fastening device fastened on the pigeon. However, said device remains silent about the structural design of the fastening device. Consequently, attachment of the tracker case, in particular in a way that it is bird-appropriate, remains a problem.

From US 2009/0002188 A1 a tracking system for an animal including a GPS module and a modem for mobile communication is known. These are integrated in a housing which can be of a snap-on type resembling a safety pin system to be attached to a collar of a dog. However, this document remains silent about the design of the safety pin system. Consequently, attachment of the tracker case, in particular in a way that it is bird-appropriate, remains a problem.

It shall be understood that a bird-appropriate attachment of the tracker case encompasses an attachment which is reliable, even under harsh conditions when the tracker case is in use. Furthermore attachment and de-attachment shall be performed fast and in a way that the bird is bothered by the attaching person as little as possible. Finally, the attached tracker case in use shall bother the bird as little as possible.

### SUMMARY OF THE INVENTION

It is the objective of the present invention to overcome the aforementioned problems.

To this end, and in accordance with the invention, a system for tracking a bird, comprising a tracker case having a housing and being attachable to the bird, and a monitoring device, wherein the tracker case comprises receiver means for receiving position and time data from a number of positioning system satellites, and transmitter means for sending said position and time data to a receiver of the monitoring device by means of data communication satellites, is characterized in that
- the housing is an aerodynamic housing having a leading edge in the direction of flight, an airflow break-away edge to further minimize aerodynamic drag of the tracker case, and a fin section on its top which reduces air resistance,
- the housing is of carbon fibres and/or glass fibres and/or aramid fibres, and
- the housing comprises a fixing means which is slidably supported on the base of the tracker case and adapted to be in spring-loaded and/or form fit engagement with a corresponding holding means attached to the bird.

The bird carries a tracker case which includes a receiver adapted to receive data from a number of satellites positioned in orbit and which provide for position and time data. Position data obtained by modern satellite technology are more precise and accurate than those obtainable by means of radio-telemetry systems. The position and time data are transmitted by means of a transmitter which is located in the tracker case, and which provides for a reliable sending of the data from the position of the bird by means of data communication satellites to the monitoring device. Use of satellite communication technology yields in more reliable communication, i.e. sending information of time and position of the bird, between the tracker case and the person who tracks the bird. In addition, by use of satellite communication technology, transmission of data can be assured in territories where other means of communication do not work, e.g. because of mountains or trees which are obstacles for sending radio waves. Finally use of communication satellites makes it possible to track the bird on any place on earth and by more than one person, such that a team of tracking persons can search for the animate being which can result in its faster discovery.

In order to provide for a safe and reliable processing of the data in the tracking case, a converter means is in communication with the receiver means and the transmitter means. The converter means converts the position and time data in a format allowing the transmitter means to process the position and time data means.

The data communication satellites can comprise Iridium satellites which have proven to be reliable and which cover the majority of the world's surface. By this it is possible to track a bird in regions where data communication is not possible at all.

The position system satellites comprise at least three Global Position Satellites (GPS). GPS has proven to be reliable and covers the majority of the world's surface. By this it is possible to track a bird in regions where obtaining position and time data is not possible at all.

In order to enhance usability of the apparatus according to the invention, the monitoring device can be a hand held device, in particular a personal digital assistant (PDA).

It may be desirous or even necessary to find a bird when weather conditions are poor, or during night time. To this end the tracker case according to the invention comprises a light source sending out a light signal which can be seen once a tracking person is comparatively close to the bird.

Other objects, features and advantages of the invention will become more apparent from the following non-limiting description of the invention taken in conjunction with the accompanying drawings.

### BRIEF DESCRIPTION OF THE DRAWINGS

Figure 1 is a diagrammatic view of the system according to the invention (flashes indicate lines of data transfer/communication in either direction);
Figure 2 is a perspective view of the tracker case according to the invention;
Figure 3 is a top view of the tracker case according to the invention;
Figure 4 is a rear view of the tracker case according to the invention;
Figure 5A is a bottom view of the tracker case according to the invention;
Figure 5B is a detailed view of a fixing means for attaching the tracker case according to the invention to a gear attached to an animate being;
Figure 6 is a plan view on a monitoring device according to the invention;
Figure 7 is a description of a first process to operate the system according to the invention;
Figure 8 is a description of a second process to operate the system according to the invention; and
Figure 9 is a description of a third process to operate the system according to the invention.

### DETAILED DESCRIPTION OF THE PRESENT INVENTION

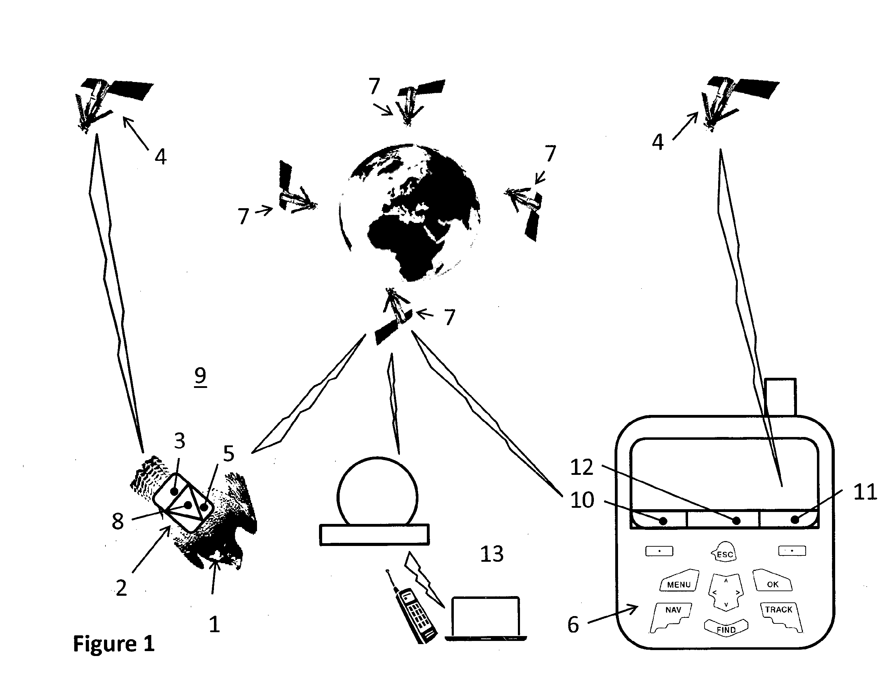

Referring to figure 1, a bird 1 carries a tracker case 2. The tracker case 2 can be positioned on the bird 1 in a way that latter one cannot manipulate or remove said tracker case 2, in particular a falcon, on its back.

Within the tracker case 2 a receiver means 3 is arranged which receives position and time data from position system satellites 4, e.g. from at least three Global Position Satellites of the Global Positioning Systems (NAVSTAR GPS). It shall be noted that the position system satellites can be subject to other satellite positioning systems, e.g. Galilieo, Glonass or Compass alike.

It shall be noted that according to the invention in addition to time data, such as date and time (UTC for example), and position data, such as longitude, latitude, and altitude, other data, such as identification numbers (in particular IMEI number of the transmitter means 5), speed over ground of the tracker case 2, loading status of a power supply (not shown) in the tracker case 2, number of retrieved GPS satellites etc. can be retrieved and exchanged between the receiver means 3, the conversion means 8, the transmitter means 5 and the monitoring device 6.

Within the tracker case 2 a transmitter means 5 is provided for sending position and time data to a monitoring device 6 via data communication satellites 7. The data communication satellites 7 can belong to the Iridium satellite network, or any other satellite communication network such as Thuraya or Inmarsat. It shall be noted that the transmitter means 5 can not only send data to the monitoring device 6, but it can also receive data from the monitoring device 6 via the data communication satellites 7. By this it is possible to send instruction data, i.e. data to manipulate the apparatus 9, in particular to the tracker case 2.

In order to allow or facilitate transfer of position and time data from the receiver means 3 to the transmitter means 5 a conversion means 8 can be provided. The conversion means 8 can comprise a corresponding micro processor (not shown).

The monitoring device 6 is a hand held device, e.g. a personal digital assistant (PDA), a smartphone or a laptop computer. However, it shall be noted that instead of, or in addition to, the handheld device 6 any other communication device can be used. For instance it can be provided that a person tracking a bird, in particular a falcon, uses a PDA, while another person can follow data and communication exchange as described before in parallel, or with time delay, by means of a computer system via Internet. The monitoring device 6 includes a World Base Map allowing for easy understanding of the user where the bird 1 to be tracked can be found.

The following procedure of data and communication exchange is followed: position and time data (at least) are received by the receiver means 3 in the tracker case 2 by the GPS satellites 4 orbiting in an altitude of about 20,200 km. These data are processed in the converter means 8 and input into the transmitter means 5 which can be an Iridium satellite modem. The aforementioned data are sent by means of the transmitter means 5 to the Iridium satellites (orbiting in an altitude of some 760 km) and relay network (data communication satellites 7). These data are then sent from the Iridium satellite and relay network 7 to the monitoring device 6 which comprises, as is generally known, receiver means for receiving data from both Iridium satellites (Iridium receiver means 10) as well as the GPS satellites 4 (GPS receiver means 11). For an exchange of data between the Iridium receiver means 10 and the GPS receiver means 11, a converter means 12 can be provided in the monitoring device 6. Data sent and received by means of the Iridium satellite system can also be received and manipulated by means of further, additional communication means 13 such as cell phones, computers connected to the Internet. By following the above procedure in reverse direction data can be transmitted from the monitoring device 6 to the tracker case 2.

The tracker case 2 may also include further communication means (not shown) allowing for e.g. GSM services.

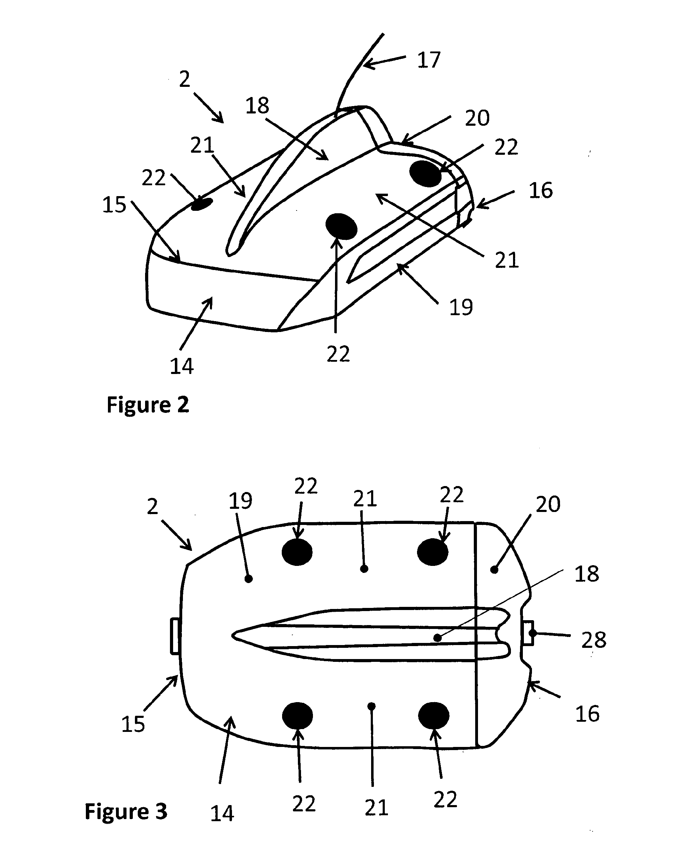

Referring now to figure 2, the tracker case 2 is shown. The tracker case 2 has an aerodynamic housing 14 of light weight material, i.e. carbon fibres and/or glass fibres and/or aramid fibres, which can be manufactured by lamination or moulding techniques. This material selection allows use of the system 9 according to the invention also in harsh conditions. For instance, the inventive tracker case 2 can be applied with falcons, which fly up to 320 km/h and in very high altitudes, without breaking. When attached to the body of the falcon, section 15 represents the leading edge of the tracker case 2 in the direction of flight. Furthermore, and in accordance with the invention, the housing 14 can comprise an airflow break-away edge 16 to further minimize aerodynamic drag of the tracker case 2.

An antenna 17 is provided for assuring communication of the receiver means 3 with the position system satellites 4 and the data communication satellites 7. It is to be noted that the antenna 17 reaches through the housing 14 as it is connected to a circuit board (not shown) on which the receiver means 3, the conversion means 8 and the transmitter means 5 can be located. To avoid any difficulties due to the electrostatic properties of the chosen materials (in particular when using carbon fibers as material for the housing 14), and in accordance with the invention, a section 18 of the housing 14 neighbouring the area where the antenna 17 exits the housing 14 can be made of an insulator material, such as aramid fibres. Section 18 is designed as a fin which reduces air resistance. However, this is not mandatory, and section 18 can be designed in any other suitable form and even form a smooth surface with rest of the housing 14.

Antenna 17 can be a 5/8 Lambda antenna made of spring steel assuring receipt and sending of data on GPS level (1575 MHz) and Iridium levels (1616 to 1626 MHz). However, it is to be understood that other types of antennae, like helix antenna, helix-core-antenna, planar antenna, Lambda ¼-antenna or the like can be used. The antenna 17 can be arranged as shown in figure 2, or it can be laminated in the housing 14, or arranged as foil antenna.

In figure 3 the leading edge 15, the airflow break-away edge 16, and the section 18 of the housing 14 can be seen, whereas the antenna has been omitted in said figure for the sake of simplicity. In this embodiment of the invention, housing 14 comprises two parts, one forming the major part of a receptacle 19, and another one forming a closure 20. While in this embodiment the receptacle comprises the leading edge 15, closure 20 comprises the airflow break-away edge 16. As can readily be seen, receptacle 19 and closure 20 form integral parts of the housing 14 when the closure 20 is fixed to the receptacle 19. Fixation can be assured by any known means, in particular by form fit, positive fit or the like.

As can be seen in figure 2 and figure 3, the outer shape of the housing 14 comprises rounded edges, in particular rounded upper side edges forming shoulders 21 extending lengthwise over the upper part of the receptacle 19. This further enhances the aerodynamic properties of the tracker case 2.

Since the bird 1 carrying the tracker case 2 must be able to be found also under bad weather conditions or during night time, tracker case 2 can be provided with a light source 22 which optically signals the position of the bird 1 to a tracking person. In the embodiment of the invention represented in figures 2 and 3, the light source 22 comprises four light emitting diodes (LED), which are arranged in couples of two and lengthwise along the respective shoulders 21 of the receptacle 19 in parallel to the fin like section 18. This arrangement is specifically advantageous because the light is emitted by the LEDs in a nearly spherical direction making it easier to be seen by a tracking person. Each LED can have a luminous intensity of 40,000 cd for example, allowing for good visibility of the tracker case for at least 2,000 meters. The light source 22 is connected to a processor (not shown) in the tracker case 2. The processor itself is in connection to the transmitter means 5, allowing to be programmed by the user such that the light source 22 is emitting light permanently or discretely by flashing. For instance, according to the invention it is possible to provide for the light source 22 to only emit light depending on some specific time related information, as received by the position system satellites 4. For instance it is possible to program the processor such that the light source 22 only emits light by flashing every 30 seconds for a second after five o'clock in the afternoon.

Furthermore it is possible that the light source 22 can signal information on its operational state, e.g. in order to indicate that the transmitter means 5 is being activated or deactivated, that the receiver means does not receive any information of the position system satellites 4, or the like.

It can be readily understood that the tracker case 2 requires a source of electrical energy (not shown). For instance, a battery and/or rechargeable battery is/are located in the tracker case 2 to provide for electrical energy which is for example consumed by the receiver means 3, the transmitter means 5, the conversion means 8, and the light source 22. The battery can be a lithium polymer battery, or it could be a super/ultra capacitor. In order to increase functioning of the battery, it is also possible to heat the battery by means of a heating means (not shown). It is also possible to provide additional or alternative means for energy provision, such as solar cells or fuel cells, or to charge the battery by means of induction or piezo elements.

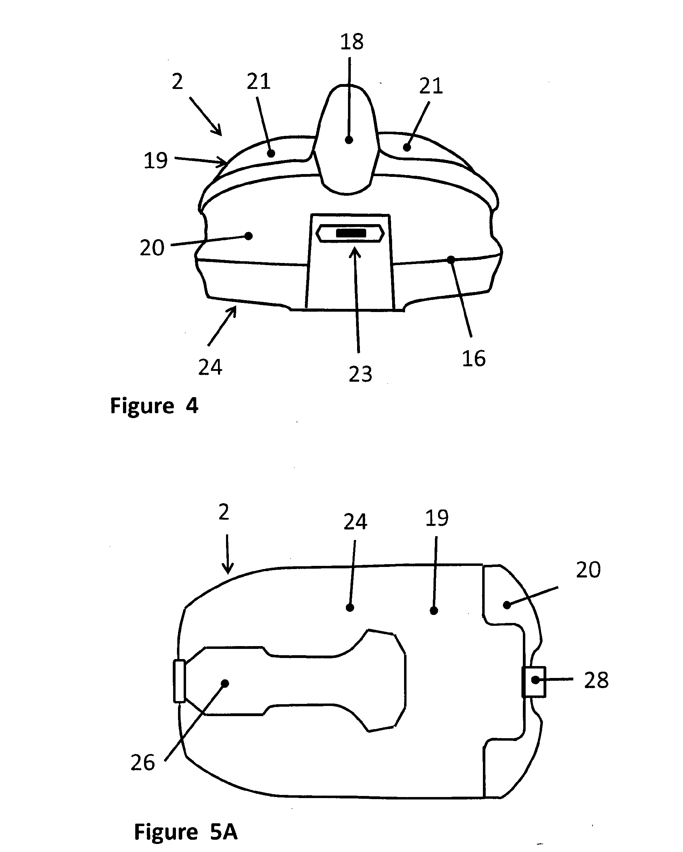

Figure 4 represents a rear view of the tracker case 2, and it specifically shows the closure 20 as well as the airflow breaking-away edge 16. Closure 20 includes an interface 23, in this given example a micro-USB interface, which is in electrical connection to the source of electrical energy and/or the other current carrying components of the track case 2, in particular the receiver means 3 and/or the transmitter means 5. By means of the interface 23, the source of electrical energy can be loaded, and the other components can be programmed if required. It is to be understood that also other types of interfaces can be provided to fulfill the aforementioned tasks.

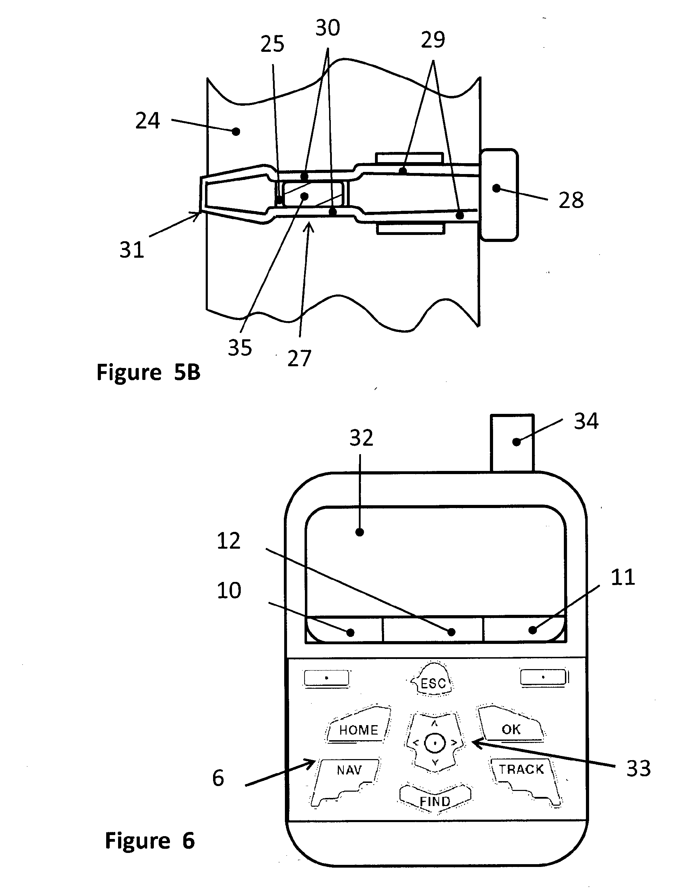

Referring now to figure 5A, the base 24 of the tracker 2 is shown from below in its closed state. An opening 25 (not shown in this figure) is closed by a lid 26. Opening 25 can receive a holding means (shown in figure 5B) of a gear (not shown) which is attached to the bird 1 as it is generally known. A fixing means 27 is slideably supported in the housing 14, it being understood that the fixing means 27 is considered as an important part of the invention.

Fixing means 27 is shown in more detail in figure 5B. A section of the base 24 of the tracker case 2 is shown from above while the fixing means 27 fixes the holding means 32 of the aforementioned gear (not shown) which extends through the opening 25. The fixing means 27 according to this embodiment is made of spring steel; however, other resilient materials can be chosen without deviation from the scope of the invention. The fixing means 27 is comprised of a handle part 28 (which is the part of the fixing means 26 shown in figure 5A), an elongated slider part 29, two contact sections 30 and a connector 31.

Slider part 29 consists of two rods which are, on one end, attached to the handle part 28. Said rods are spaced apart to each other, for instance in parallel, and evolve into the contact sections 30 at their respective other ends. The contact sections 30 have a smaller distance from each other than the respective rods 29 and fix the holding means 32, according to this example, by spring load and form fit. The respective far ends (far from the handle part 28) of the contact sections 30 are connected to each other by the connector 31. As can readily be seen in figure 5B, those portions of the contact section 30 neighbouring the rods 29 and the connector 31 are rounded, which facilitates the movement of the contact sections 30 over the holding means 32.

The connector 31 is of somewhat elongate shape as can be seen from figure 5B, allowing the fixing means 27 to be slidably moved in the housing 24. According to the present example, when a user moves the handle part 28 to the right according to figure 5B, the contact sections 30 would loose contact to the holding means 32, thus allowing the tracker case 2 to be released from the holding means 32.

The aforementioned design is specifically advantageous because it allows attaching and de-attaching of the tracker case 2 to the gear in a very short amount of time, e.g. 2 to 3 seconds, and without having to touch the animate being 1 while doing so.

In order to activate or de-activate anyone or all of means 3, 5 or 7 for instance, a magnetic switch (not shown) is arranged within the tracker case 2, as it is generally known in the prior art.

Said magnetic switch is activated by a corresponding activation element (not shown) in the monitoring device 6, which is explained now more in detail with reference to figure 6. The monitoring device 6 comprises, as described before, receiver means 10 to receive communication data, for instance from an Iridium network. It shall be understood that communication data refers to any kind of data that is received by the receiver means 10, be it position data, time data, language data, computer data, or the like. For instance, data concerning the IMEI number of the satellite modem, latitude, longitude, altitude, speed, date, time, number of spotted GPS satellites, and battery level, can be received and sent by means of the receiver means 10. It shall be understood that, while the term receiver means 10 is used, the receiver means 10 is also capable of sending data, in particular the aforementioned data, to any other correspondingly adapted receiver.

It shall be understood that monitoring device 6 is generally adapted to receive and send data using satellite technology, GSM technology, radio telemetry and any kind of combination thereof.

Monitoring device 6 further comprises a location receiver means 11, for instance to receive data from a GPS system. In order to allow communication and exchange of data within the monitoring device 6, a conversion means 12 for converting data to a unified or simplified set of data is provided. The aforementioned items can be fixed on a board, for instance an FR4 circuit board.

A source of electrical energy (not shown) is provided in monitoring device 6. For instance, a battery and/or rechargeable battery is/are located to provide for electrical energy which is for example consumed by the receiver means 10, the transmitter means 11, the conversion means 12, the display 32, and a light source (not shown) to illuminate the keyboard 33 of the monitoring device 6. The source of electrical energy can be a battery, e.g. a lithium polymer battery, or it could be a super/ultra capacitor. In order to increase functioning of the battery, it is also possible to heat the battery by means of a heating means (not shown). It is also possible to provide additional or alternative means for energy provision, such as solar cells or fuel cells, or to charge the battery by means of induction, or piezo elements. Finally it is possible to load the battery within the monitoring device 6 by connecting it to a power supply outside said device 6, e.g. by means of a USB cable to a USB interface (not shown), as is generally known. For the sake of completeness it shall be mentioned that the USB interface can also be used for updating the software in the monitoring device 6, or to pair it with the electrical means in the tracker case 2, e.g. the transmitter means 5.

As can be seen in figure 6, the keyboard 33 is comprised of nine different keys forming the silhouette of a falcon. However, this is not mandatory; rather, keyboard 33 can consist of keys which are customary in prior art devices. Furthermore the keyboard 33 can replace or be complemented by a display 32 that is designed as touch screen. It is within the scope of this invention that the animate form of the keys can be represented on said touch screen, allowing operation the system 9 according to the invention.

By means of a transverse position sensor (not shown) adaptation of the information presented on the display 32 is possible in accordance with the holding position of the monitoring device 6 by the user. Despite the data mentioned before, further data concerning information with respect to messaging of the data, expected time of receipt of a next message, and information customary to route guidance systems can be received, sent, tracked and presented in accordance with the present invention. Furthermore, instructions can be inputted in the monitoring device 6, e.g. instructions to choose an operation language of the system 9 or a specific time zone.

Monitoring device 6 has an antenna 34, which, according to this embodiement, is a Helix-Hybrid-Satellite antenna adapted to receive and send data using the Iridium and GPS frequencies. However, it shall be understood that also other types of antennae, like Helic-Core antennae, planar antennae, Lambda ¼ antenna, Lambda 5/8 antenna can be provided. Said antennae can be laminated into the housing of the monitoring device 6, or they can be replaceable, fixedly mounted or foil antennae.

Monitoring device 6 also includes a GPS module which is generally known in prior art for receipt of position data. However, according to the invention other geo position systems, like Galileo, or a combination of Galileo and Navstar-GPS can be envisaged.

According to the invention, it is possible to track not only one bird 1 by means of the system 9, but to track several, in particular three, birds 1 at the same time.

According to the invention it is possible to find the way from a place where the bird 1 has been tracked and found (find spot) back to the start location where the tracking process has started by storing the geo data of the start location, comparing the geo data of the start location with the geo data of the find spot, and calculating a path from the find spot to the start location as it is generally known in the prior art. To this end, a navigation system is included in the system 9 according to the invention.

It is also possible to provide for an emergency mode, i.e. in case of an emergency a user instructs the monitoring device 6 by pushing a button (be it a mechanical key in its housing or a virtual key on the display 32) to send data, which represent an emergency state, via e.g. the Iridium communication network.

It shall be understood that, while unidirectional data transfer via the Navstar GPS has been described before, also bidirectional data transfer via the Navstar GPS network is part of the invention.

In order to make operation of the system 9 more transparent, different operation modes are described.

In the first operation mode (hereinafter referred to as "Mode 1") the transmitter 5 in the tracker case 2 can be operated in a transmitting cycle mode, during which relevant data for tracking the bird, in particular latitude, longitude and altitude of the bird, its speed, actual time and date and/or the energy level of the energy source of the tracker case, are sent according to a defined cycle, in particular one sending operation particular every 5 to 120 minutes (data sending cycle).

According to the invention the data can be received by the monitoring device 6, but also by other communication means (13 in figure 1) in order to facilitate search of the bird 1. For instance, a falcon can be tracked in Dubai not only by one or several person(s) there, but also by a person in a different country or even continent giving assistance to those individuals who physically want to find the bird 1.

In addition to this, outputting a light signal from the light source 22 can take place according to a defined cycle (flashing cycle), which can have, but not necessarily has to have, the same cycle rate as the data sending cycle. In particular the flashing cycle can be turned off when the user of the system 9 positively knows or estimates that the tracking operation will be finished during day time and under favorable weather conditions.

Finally, the data sending cycle and/or flashing cycle can be turned off when the user of the system 9 knows that the tracked bird 1 is in proximity to the monitoring device 6, in particular some 400 m to 2,000 m away (hereinafter referred to as "Radius Check Mode 1"). This is in particular the case when the bird 1 is released and has not yet departed, or the user of the system 9 can see the bird 1 at the end of a tracking process.

It is also possible to operate the system 9 according to a transmitting time mode (hereinafter referred to "Mode 2"), during which relevant data for tracking the bird 1, in particular latitude, longitude and altitude of the bird 1, its speed, actual time and date and/or the energy level of the energy source of the tracker case 2, are sent according to a defined transmitting time, in particular one data transmission every full hour, and/or 30 data transmissions during 3 days of operation of the tracker case 2 at a given hour.

In addition to this, outputting a light signal from the light source 22 can take place according to a defined time mode (flashing time mode), which can have, but not necessarily has to have, the same timing as the transmitting time mode (Mode 1). In particular the flashing time mode can be turned off when the user of the system 9 positively knows or estimates that the tracking operation will be finished during day time and under favorable weather conditions.

Finally, the transmitting time mode (Mode 1) and/or flashing time mode can be turned off when the user of the system 9 knows that the tracked animate being 1 is in proximity to the monitoring device 6, in particular some 400 m to 2,000 m away (hereinafter referred to as "Radius Check Mode 2"). This is in particular the case when the bird 1 is released and has not yet departed, or the user of the system 9 can see the bird 1 at the end of a tracking process.

It shall be noted that a combination of any one of the transmitting cycle mode, flashing mode, transmitting time mode and flashing time mode is possible.

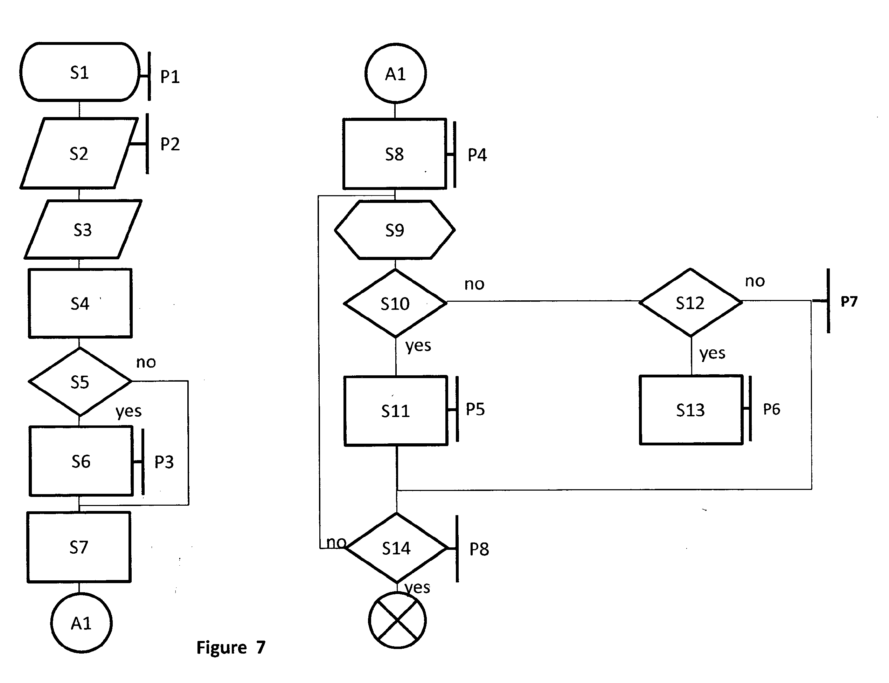

An exemplary process of operation of the system is now accordingly described in detail (cf. figure 7):

In a first step S1 tracker case 2 and monitoring device 6 are linked to each other, in particular by means of a USB cable to the USB interface 23 or wireless (e.g. by use of a Bluetooth connection). The energy source of the tracker case 2 is loaded (P1). In a next step S2, energy level information and IMEI (International Mobile Equipment Identity) number information are sent via the USB connection, and further hardware as well as software information is readout (P2). In a next step S3, tracker 2 is instructed whether the user wants to follow Mode 1 or Mode 2 operation as described above via the USB interface 23, and said instruction is saved in the tracker case according to step S4. Next, if either Mode 1 or Mode 2 is chosen, the user has to decide whether Radius Check Mode 1 or Radius Check Mode 2 shall be activated, and has to instruct tracker case 2 accordingly (step S5). If either Radius Check Mode 1 or Radius Check Mode 2 is selected, then monitoring device 6 needs to receive and transfer geo position data (GPS data) (cf. P3 in figure 7) which are saved in the tracker case 2 (step S6). Following step S6, or If neither Radius Check Mode 1 nor Radius Check Mode 2 was chosen, the tracker case 2can be disconnected from the monitoring device 6 (step S7).

In a next step S8 the transmitter means 5 in the tracker case 2 is activated by means of the solenoid switch described above. Feedback on the activation is given to the user by a specific flashing signal of the light source 22 (cf. P4), for example 60 light flashes per minute.

Once the tracker case 2 is activated and attached to the bird 1, the following routine is executed (S9) to control the bird's 1 path (e.g. the flight route of a falcon).

If Mode 1 was selected and programmed (S10), all relevant data are being sent via the transmitter means 5 (e.g. the Iridium network) to the corresponding receiver means 10 of the monitoring device 6 (step S 11) in accordance with the chosen cycle, e.g. every 30 minutes. The relevant data include latitude, longitude, altitude and, preferably information on the battery condition (cf. P5). If in addition to this a flashing time mode was selected, the light source 22 outputs light signals accordingly. If in addition to this Radius Check Mode 1 was selected, the aforementioned steps S11 and P5, respectively, start only after the animate being 1 has left the chosen area.

If Mode 1 has not been selected in step S10, but Mode 2 (S12), all relevant data (as described before) are transmitted by the transmitter means 5 of the tracker case 2 (S13) according to the selected plan, e.g. eight data transmission proceedings per day for the next three days (P6). If in addition to this a flashing time mode was selected, the light source 22 outputs light signals accordingly (P6). If in addition to this Radius Check Mode 2 was selected, the aforementioned steps S12 and P6, respectively, start only after the animate being 1 has left the chosen area.

In any event, according to P5 and P6, assessment of the position of the tracker case 2 is made in defined time intervals, e.g. every 10 minutes.

As can be readily understood, steps S10 and S12 can only be performed if tracker case 2 has access to both the position system satellites 4 and the data communication satellites 7 (cf. P7).

If the bird 1 is found, the transmitter means 5 can be turned off (S14), e.g. by using the solenoid switch of the tracker means 2 and monitoring device 6 as described above. Turning off operation can be indicated by a light signal, e.g. by flashing of the light source 22 during 6 seconds (P8).

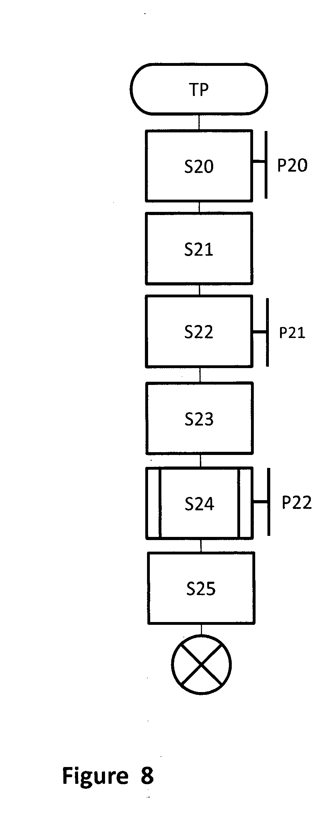

In figure 8, a track process (TP) to track at least one bird 1, e.g. falcon, is described. In a first step S20, the monitoring device 6 receives data from the data communication satellites 7, e.g. the Iridium satellites, which are relayed from the tracker case 2 via the data communication satellites 7 and/or the communication means 13. To this end, connection to the Iridium network must be established (P20). Next, one out of a number of different animate beings 1 which are registered within the system 9 according to this invention, can be selected (S21) in the monitoring device 6; the selected bird 1 is the chosen one to be tracked, e.g. a falcon. In a next step (S22), data associated to the falcon are displayed in the display 32. In particular, and as can be seen from P21, its speed or its current altitude are represented. Furthermore, technical data relating to latitude and longitude, battery condition of the tracker case 2, time and date are shown as well as an indication of the direction the falcon is heading for ("course over ground").

It shall be noted that the altitude of the falcon, but also of the person tracking the falcon, are of specific interest because, based upon them, it is possible to estimate whether the animal is about to or actually flying for a longer period of time (e.g. difference in altitude of falcon and person is big indicates that the bird is flying high; difference in altitude between falcon and person is small indicates that the falcon does not fly).

Once these data are received by the monitoring device 6, the position of the falcon is shown on a map which is present in the monitoring device 6 (S23). In a next step S24, and having established connection to position system satellites 4 (e.g. Navstar GPS satellites) (P22), the user of the monitoring device 6 requests the GPS system to find a route to the location of the falcon, as it is basically known in prior art. Once this has been achieved, the navigation can stop (S25).

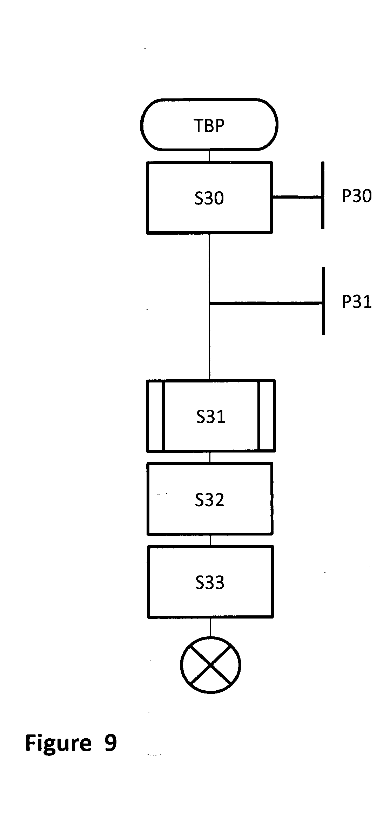

In figure 9 a track back process (TBP) according to the invention is described. In a first step S30, current position data, e.g. GPS data, are saved. To this end, reception of GPS signals is necessary (P30). The bird 1, e.g. a falcon, is flying and found (P31). Next, the person having found the falcon wants to return to the place where the tracking process has begun. To this end, an instruction S31, being navigation to a starting point (or track back as described before), is followed. Once this has been achieved, i.e. the person having found the animate being 1 has returned to the starting location of the tracking process, the navigation can be finalized S32, e.g. by turning off the monitoring device 6, and the data related to the starting point can be erased S33.

While selected features of the invention were described above in detail, it shall be understood that any or all of the features, or any or all combinations thereof, which have not been described or claimed in detail, is to be considered as part of the invention and its disclosure. This is particularly true for the tracker case 2 and its associated feature according to this application text, which is to be considered an invention in itself.

### LIST OF REFERENCE NUMBERS

- 1: Bird
- 2: Tracker case
- 3: Receiver means
- 4: Position system satellites
- 5: Transmitter means
- 6: Monitoring device
- 7: Data communication satellites
- 8: Conversion means
- 9: System
- 10: Iridium receiver means
- 11: GPS receiver means
- 12: Converter means
- 13: Communication means
- 14: Housing
- 15: Leading edge
- 16: Airflow break-away edge
- 17: Antenna
- 18: Section
- 19: Receptacle
- 20: Closure
- 21: Shoulders
- 22: Light source
- 23: Interface
- 24: Base of the tracker case
- 25: Opening
- 26: Lid
- 27: Fixing means
- 28: Handle part
- 29: Rods
- 30: Contact sections
- 31: Connector
- 32: Display
- 33: Keyboard
- 34: Antenna
- 35: Holding means

## Claims

1. System (9) for tracking a bird (1), comprising a tracker case (2) having a housing (14) and being attachable to the bird (1), and a monitoring device (6), wherein the tracker case (2) comprises receiver means (3) for receiving position and time data from a number of positioning system satellites (4), and transmitter means (5) for sending said position and time data to a receiver (10) of the monitoring device (2) by means of data communication satellites (7), **characterized in that**:
- the housing (14) is an aerodynamic housing (14) having a leading edge (15) in the direction of flight, an airflow break-away edge (16) to further minimize aerodynamic drag of the tracker case (2), and a fin section (18) on its top which reduces air resistance,
- the housing (14) is of carbon fibres and/or glass fibres and/or aramid fibres, and
- the housing comprises a fixing means (27) which is slidably supported on the base (24) of the tracker case (2) and adapted to be in spring-loaded and/or form fit engagement with a corresponding holding means (35) attached to the bird (1).

2. System (9) according to claim 1, **characterized by** converter means (8) in communication with the receiver means (3) and transmitter means (5) in order to convert the position and time data in a format allowing the transmitter means (5) to process the position and time data.

3. System (9) according to claim 1 or 2, **characterized in that** the data communication satellites (7) are Iridium satellites.

4. System (9) according to any of the preceding claims, **characterized in that** the position system satellites (4) comprise at least three Global Position Satellites.

5. System (9) according to any of the preceding claims, **characterized in that** the monitoring device (6) is a hand held device.

6. System (9) according to any of the preceding claims, **characterized in that** the tracker case (2) comprises a light source (22).

## Patentansprüche

1. System (9) zum Verfolgen eines Vogels (1), das einen Verfolgerbehälter (2) mit einem Gehäuse (14) umfasst und an dem Vogel (1) befestigbar ist, sowie eine Überwachungsvorrichtung (6), wobei der Verfolgerbehälter (2) ein Empfangsmittel (3) zum Empfangen von Positions- und Zeitdaten von einer Anzahl von Positionssystemsatelliten (4) und ein Übertragungsmittel (5) zum Senden der Positions- und Zeitdaten an einen Empfänger (10) der Überwachungsvorrichtung (2) vermittels Datenkommunikationssatelliten (7) umfasst, **dadurch gekennzeichnet, dass**:
- das Gehäuse (14) ein aerodynamisches Gehäuse (14) mit einer Anströmkante (15) in Flugrichtung, einer Abrisskante (16) zur weiteren Verringerung des Luftwiderstandes des Verfolgerbehälters (2) und einen Flossenabschnitt (18) auf seinem oberen Teil aufweist, das den Luftwiderstand verringert,
- das Gehäuse (14) aus Kohlenstofffasern und/oder Glasfasern und/oder Aramidfasern ausgebildet ist, und
- das Gehäuse ein Befestigungsmittel (27) umfasst, das verschieblich an der Basis (24) des Verfolgerbehälters (2) gelagert und eingerichtet ist, kraftschlüssig und/oder formschlüssig mit einem korrespondierenden Haltemittel (35), das an dem Vogel (1) befestigt ist, verbunden zu sein.

2. System (9) gemäß Anspruch 1, **gekennzeichnet durch** ein in Kommunikation mit dem Empfangsmittel (3) und Übertragungsmittel (5) stehendes Wandlermittel (8), um die Positions- und Zeitdaten in ein Format umzuwandeln, das dem Übertragungsmittel (5) erlaubt, die Positions- und Zeitdaten zu verarbeiten.

3. System (9) gemäß Anspruch 1 oder 2, **dadurch gekennzeichnet, dass** die Datenkommunikationssatelliten (7) Iridiumsatelliten sind.

4. System (9) gemäß einem der vorherigen Ansprüche, **dadurch gekennzeichnet, dass** die Positionssystemsatelliten (4) wenigstens drei Globale-Positions-Satelliten umfasst.

5. System (9) gemäß einem der vorhergehenden Ansprüche, **dadurch gekennzeichnet, dass** die Überwachungsvorrichtung (6) eine tragbare Vorrichtung ist.

6. System (9) gemäß einem der vorhergehenden Ansprüche, **dadurch gekennzeichnet, dass** der Verfolgerbehälter (2) eine Lichtquelle (22) umfasst.

## Revendications

1. Système (9) de suivi d'un oiseau (1), comprenant un boîtier de suivi (2) ayant un logement (14) et pouvant être attaché à l'oiseau (1), et un dispositif de surveillance (6), dans lequel le boîtier de suivi (2) comprend des moyens récepteurs (3) destinés à recevoir des données de position et de temps provenant d'un certain nombre de satellites d'un système de géolocalisation (4), et des moyens émetteurs (5) destinés à envoyer lesdites données de position et de temps à un récepteur (10) du dispositif de surveillance (2) au moyen de satellites de communication de données (7), **caractérisé en ce que** :
- le logement (14) est un logement aérodynamique (14) ayant un bord d'attaque (15) orienté dans le sens du vol, un bord de décollement des filets d'air (16) pour réduire davantage la traînée aérodynamique du boîtier de suivi (2), et une section d'aileron (18) sur son dos pour réduire la résistance à l'air,
- le logement (14) est en fibres de carbone et/ou en fibres de verre et/ou en fibres d'aramide, et
- le logement comprend des moyens de fixation (27) qui sont supportés de manière coulissante sur la base (24) du boîtier de suivi (2) et conçus pour venir en prise par effet ressort et/ou par correspondance de forme avec des moyens de retenue correspondants (35) attachés à l'oiseau (1).

2. Système (9) selon la revendication 1, **caractérisé par** des moyens convertisseurs (8) en communication avec les moyens récepteurs (3) et les moyens émetteurs (5) afin de convertir les données de position et de temps dans un format permettant aux moyens émetteurs (5) de traiter les données de position et de temps.

3. Système (9) selon la revendication 1 ou 2, **caractérisé en ce que** les satellites de communication de données (7) sont des satellites du réseau Iridium.

4. Système (9) selon l'une quelconque des revendications précédentes, **caractérisé en ce que** les satellites du système de géolocalisation (4) comprennent au moins trois satellites du réseau GPS.

5. Système (9) selon l'une quelconque des revendications précédentes, **caractérisé en ce que** le dispositif de surveillance (6) est un dispositif portable.

6. Système (9) selon l'une quelconque des revendications précédentes, **caractérisé en ce que** le boîtier (2) comprend une source lumineuse (22).
